# EUROPEAN PATENT SPECIFICATION

(11) **EP 0 759 240 B1**
(45) Date of publication and mention of the grant of the patent: **04.12.2002**
(21) Application number: 95917376.6
(22) Date of filing: 08.05.1995
(51) Int. Cl.: H04L 1/22

(54) **UNIT CHANGEOVER IN A NODE FORWARDING PACKET DATA**
EINHEITSAUSTAUSCH IN EINEM DATENPAKETWEITERGABEKNOTEN
PERMUTATION D'UNITE DANS UN NOEUD ACHEMINANT DES DONNEES PAR PAQUETS

(30) Priority: 09.05.1994 FI 942140
(43) Date of publication of application: 26.02.1997
(73) Proprietor: Nokia Corporation, 02150 Espoo (FI)
(72) Inventor: SALOVUORI, Heikki, FIN-00850 Helsinki (FI)
(74) Representative: Holmström, Stefan Mikael
(86) International application number: FI9500242
(87) International publication number: WO95031056

(56) References cited:
- EP-A- 0 347 069
- US-A- 5 014 261
- PATENT ABSTRACTS OF JAPAN vol. 16, no. 294 (E-1225) 29 June 1992 & JP 04 077 127 A (EISEI TSUUSHIN SHISUTEMU GIJIYUTSU KENKIYUUSHIYO KK) 11 March 1992

## Description

The present invention relates to implementing unit changeover in a telecommunication node forwarding packet data.

One problem in this kind of packet data forwarding nodes such as digital telephone exchanges, concentrators, repeaters, etc, has been the activation of a spare unit without disturbances, i.e. without losing traffic data.

Typically, communication protocols are well standardized and include necessary failure recovery mechanisms. In a known recovery mechanism all messages are re-transmitted from a point known to both ends. Equipment made by different manufacturers can be located at the ends of the line, in which case both ends must simply implement a standardized recovery mechanism to secure cooperation.

Recovery mechanisms in which telecommunication channel handover and return are implemented by bufferings determined by a standard are also known. In neither these standards (MTP) nor in their implementations (for example, the Nokia DX200 exchange) has it been possible to determine, due to requirements of standardization compatibility, any such buffering by which a unit changeover could be implemented without disturbances.

Thus, the known protocols do not include buffering, because all definitions referring to the techniques of implementation have been avoided in them. The aim of MTP buffering is not the changeover of a multi channel unit, but the recovery of channels/buses in cases of malfunction.

Further, the standardized Frame Relay protocols (UNI, NNI) used in the packet data forwarding systems do not include any failure recovery mechanism typical for protocols; so, to provide fault tolerance with each Frame Relay implementation is important. In unit changeover, none of the possibilities offered by the protocol standard, for example concerning buffering or re-transmission, can either be found support in.

Thus, the equipment which include telecommunication protocols have usually been doubled in known telecommunication systems in order to achieve fault tolerance, in which case the proximate doubling equipment is kept in the level of the active part in real time. This is a very heavy and complicated method for handling a unit changeover in which both of the units participating in the changeover work properly.

The aim of the method of the present invention is to provide a method for a simple and efficient implementation of a unit changeover in telecommunication systems. The method of the invention is characterized by
- buffering the traffic aimed at the channels of the unit to be changed;
- emptying transmission buffers of the channels of the unit to be changed by transmitting data contained in them to its destination;
- switching a replacement unit to the channels of the unit to be changed, and updating the information of the node to correspond to the new configuration, and beginning the reception of the traffic from the channels;
- activating the outgoing traffic by releasing the buffered traffic through the replacement unit.

There is also provided a method according to Claim 5.

In principle, by the buffering principle in accordance with the invention it should be possible to handle unit changeover in connection with any protocol, if the primitives that relate to buffer controlling can be added to the protocol. Usually, the prerequisite is a compatibility of protocol stacks of both ends.

The method in accordance with the invention is especially well suited to a so-called prepared changeover, in which both of the equipment participating in the changeover are in a proper working order. The method can be utilized in the changeover of N+1 redundant units without any significant equipment support, for example, in connection with service or expansion, to withdraw an active piece of equipment from traffic. The unit to be changed typically contains several physical channels of packet traffic.

The method of the invention can further be applied to a switching of a single channel, switching of a logical channel of a physical channel, and to cases in which unit changeover is performed between nodes that have spare or alternative channels.

The invention is based on the idea that as, for example, in Frame Relay protocols the internal protocol of the network is not standardized, but standardization reaches the subscriber interface (UNI) and the interface between networks (NNI), a protocol best suited for the techniques of implementation can be developed within the network. In addition, a protocol towards the subscriber end can be developed. This can easiest be implemented when both ends use equipment made by the same manufacturer.

The buffering principle in accordance with the invention is especially well suited to be used in a digital node based on a distributed structure, such as, for example, the Nokia digital telephone exchange DX200.

The other preferred embodiments of the invention are characterized by that which is set forth in the attached claims.

In the following, the invention will be described in greater detail by means of examples and with reference to the accompanying drawings, in which
figure 1 shows a general view of a telecommunication network with telecommunication nodes forwarding packet data,
figure 2 shows an example of a redundant node, in which the method in accordance with the invention can be applied.

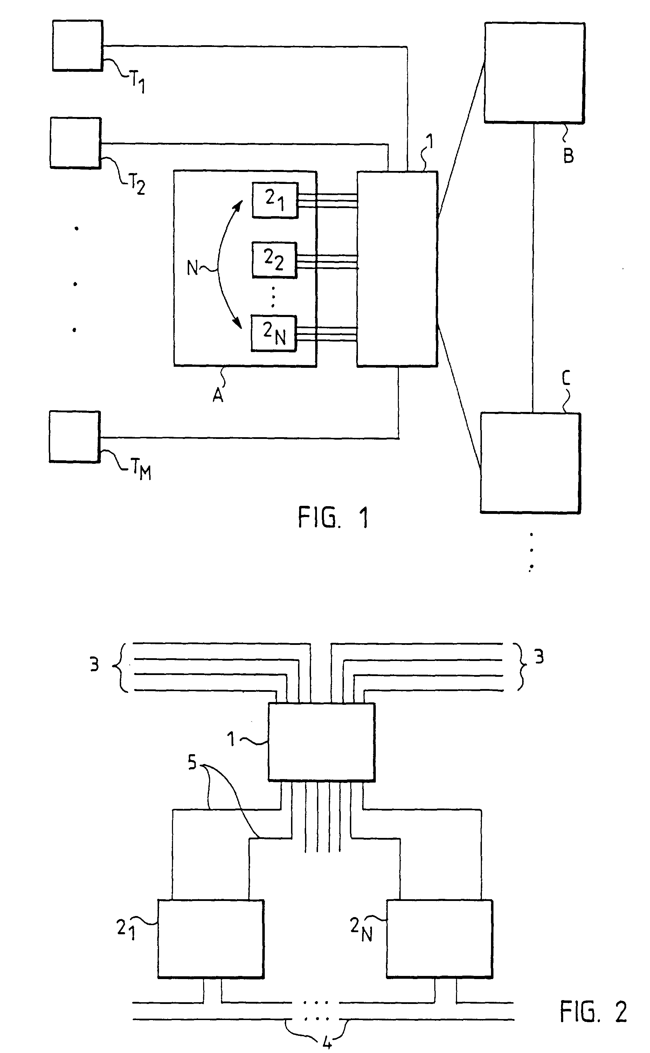

In a telecommunication node of figure 1, telecommunication nodes forwarding packet data are indicated by reference marks A, B, C, etc. In connection with the node A, a number of units 2₁ -2_{N}, which handle packet data, and a number of subscribers T₁ - T_{M} connected to the node A, are drawn. Further, in connection with the node A, a separately drawn switching field 1 is illustrated, which is the switching element determining the forwarding of traffic between subscribers, units and different nodes, and by programming of which channelling changes are implemented. The arrow N in the node A illustrates the problem that can be solved by this invention, i.e. in this exemplary case the changeover from the unit 2₁ to the unit 2_{N}.

In the node of figure 2, the switching element that performs the unit changeover is illustrated by the reference number 1, and a number of units to be switched (only 2 drawn), which are units handling packet data, are illustrated by reference numbers 2₁ - 2_{N} as in figure 1. Typically, each unit handles a number of physical channels 5 which are forwarded through switching element 1 to the channels between different nodes and/or subscriber channels 3. Bus 4 is a data transmission bus operating node internally as well as between the different units, from which data transmission bus each unit picks the data packets meant for their respective channels by following a TDMA or some other multiplexing principle. Bus 5 carriers data packets to be sent as well as received data packets.

A unit changeover implemented in accordance with the invention is simplest in a case when the equipment at the far end, i.e. other nodes and subscriber stations connected to the node in which the changeover will be performed, are able, following a request from the node, to buffer their outgoing traffic for the time of the changeover instead of sending it. To accomplish this, a request for buffering outgoing traffic is sent to other nodes and/or subscriber stations communicating on the channels of the unit to be changed (one of the units 2₁ - 2_{N}). Simultaneously, the packets in the transmission buffer of the corresponding channels of the node are transmitted to their destination and emptied so that the data contents of the unit to be changed could be emptied. Following this, the information of the control computer (not shown) of the node is updated to correspond to the new configuration, the switching field information in switching element 1 is changed, and the traffic on the channels in question is begun through the replacement unit which can be any one unit from the group 2₁ - 2_{N}, but not the above-mentioned unit to be changed.

If, for example, only some of the other nodes or subscriber stations connected to the node are able to buffer their own transmit channels, the node in which the unit changeover takes place must itself buffer the incoming traffic for this part. In practice, buffering can be performed in the replacement unit until the new information corresponding to the new situation is updated to the node and until the buffers of the unit to be changed are transmitted empty.

If extra buffering in the node is undesired, a procedure similar to the one above can be followed, so that the equipment capable of buffering during the changeover does buffer, and the packets transmitted by the other equipment are destroyed in the node, in which case packets of these connections are lost.

If no other node or subscriber station connected to the node is able to buffer the packets to be send to the node for the time of the unit changeover, the node performing the unit changeover must naturally buffer all traffic for the time of the unit changeover.

The updating of the new information must, of course, be done so that packets do not get in a wrong sequence. Buffering can be performed as far as, for example, old and new packets are concerned, in two parts so that packets do not go mixed to the same buffer and thus into a wrong sequence.

As an example of a unit changeover, a situation can be mentioned in which physical or logical channels have spare connections between, for example, nodes. If the spare connections are distributed into different units (which is sensible), a unit can be withdrawn from traffic by switching the traffic by a handover to a second unit and the spare connection, by a usual (disturbance free) handover procedure. The handover to a spare connection corresponds to buffering in this case. The unit to be changed can, if necessary, be changed without causing any disturbances to the traffic, and the traffic from the channels can be returned back to the original channels through the replacement unit in a similar manner as described above.

It is obvious for a person skilled in the art that the embodiments are not restricted to the examples above, but they may vary within the scope of the attached claims.

## Claims

1. A method for implementing unit changeover in a node forwarding packet data, **characterized by**
- buffering the traffic aimed at the channels of the unit to be changed;
- emptying transmission buffers of the channels of the unit to be changed by transmitting data contained in them to its destination;
- switching a replacement unit to the channels of the unit to be changed, and updating the information of the node to correspond to the new configuration, and beginning the reception of the traffic from the channels;
- activating the outgoing traffic by releasing the buffered traffic through the replacement unit.

2. A method as claimed in claim 1, **characterized in that** the incoming traffic to the channels of the unit to be changed is interrupted by transmitting a request for buffering any outgoing traffic for the time of the unit changeover to the far end of the channels relating to the unit to be changed;

3. A method as claimed in claim 1 or 2, **characterized in that** a part of the incoming traffic to the channels of the unit to be changed is buffered at the far end and a part at the end of the unit to be changed during the unit changeover.

4. A method as claimed in claim 1 or 2, **characterized in that** all the incoming traffic to the unit to be changed is buffered at the end of the unit to be changed for the time of the unit changeover.

5. A method for implementing unit changeover in a node forwarding packet data, **characterized by**
- guiding the traffic aimed at the channels of the unit to be changed to spare channels of the node by a handover;
- emptying transmission buffers of the channels of the unit to be changed by transmitting data contained in them to its destination;
- switching a replacement unit to the channels of the unit to be changed, and updating the information of the node to correspond to the new configuration, and beginning the reception of the incoming traffic from the channels;
- performing a handover of the outgoing traffic from the spare channels to the channels of the replacement unit.

6. A method as claimed in claim 5, **characterized in that** the unit changeover is performed by switching the traffic of each channel to a second unit on a spare channel by a handover, after which the unit to be changed which is not handling traffic is replaced by a replacement unit, after which the traffic is returned to the original channels in the replacement unit.

## Patentansprüche

1. Verfahren zur Implementierung eines Einheitsaustausches bei einem Paketdaten weiterleitenden Knoten,
**gekennzeichnet durch**
Puffern des auf die Kanäle der auszutauschenden Einheit gerichteten Verkehrs;
Leeren von Übertragungspuffern der Kanäle der auszutauschenden Einheit **durch** Übertragen von in diesen enthaltenen Daten an ihr Ziel;
Vermitteln einer Ersatzeinheit an die Kanäle der auszutauschenden Einheit und Auffrischen der Knoteninformationen, damit sie der neuen Konfiguration entsprechen, und Beginnen mit dem Empfang des Verkehrs von den Kanälen; und
Aktivieren des abgehenden Verkehrs **durch** Freigeben des gepufferten Verkehrs **durch** die Ersatzeinheit.

2. Verfahren nach Anspruch 1,
**dadurch gekennzeichnet, dass**
der eingehende Verkehr an die Kanäle der auszutauschenden Einheit unterbrochen wird, indem eine Anfrage zum Puffern von abgehendem Verkehr zum Zeitpunkt des Einheitsaustausches an das bezüglich der auszutauschenden Einheit andere Ende übertragen wird.

3. Verfahren nach Anspruch 1 oder 2,
**dadurch gekennzeichnet, dass**
während des Einheitsaustausches ein Teil des eingehenden Verkehrs an die Kanäle der auszutauschenden Einheit am anderen Ende und ein Teil an dem Ende der auszutauschenden Einheit gepuffert wird.

4. Verfahren nach Anspruch 1 oder 2,
**dadurch gekennzeichnet, dass**
der gesamte eingehende Verkehr an die auszutauschende Einheit zum Zeitpunkt des Einheitsaustausches am Ende der auszutauschenden Einheit gepuffert wird.

5. Verfahren zur Implementierung eines Einheitsaustausches bei einem Paketdaten weiterleitenden Knoten,
**gekennzeichnet durch**
Leiten des an die Kanäle der auszutauschenden Einheit gerichteten Verkehrs an Reservekanäle des Knotens **durch** einen Übergabevorgang;
Leeren von Übertragungspuffern der Kanäle der auszutauschenden Einheit **durch** Übertragen von in diesen enthaltenen Daten an ihr Ziel;
Vermitteln einer Ersatzeinheit an die Kanäle der auszutauschenden Einheit und Auffrischen der Knoteninformationen, damit sie der neuen Konfiguration entsprechen, und Beginnen mit dem Empfang des eingehenden Verkehrs von den Kanälen; und
Durchführen eines Übergabevorgangs des abgehenden Verkehrs von den Reservekanälen an die Kanäle der Ersatzeinheit.

6. Verfahren nach Anspruch 5,
**dadurch gekennzeichnet, dass**
der Einheitsaustausch durch Vermitteln des Verkehrs von jedem Kanal auf eine zweite Einheit auf einem Reservekanal durch einen Übergabevorgang durchgeführt wird, wonach die keinen Verkehr handhabende auszutauschende Einheit durch eine Ersatzeinheit ersetzt wird, wonach der Verkehr auf die ursprünglichen Kanäle in der Ersatzeinheit zurückkehrt.

## Revendications

1. Procédé pour l'implémentation d'une permutation d'unité dans un noeud acheminant des données paquet, caractérisé en
- la protection du trafic concerné par les canaux de l'unité à permuter ;
- l'effacement des mémoires tampons de transmission des canaux de l'unité à permuter en transmettant les données contenues vers leur destination;
- la commutation d'une unité de rechange sur les canaux de l'unité à permuter, et la mise à jour de l'information du noeud pour correspondre à la nouvelle configuration, et le démarrage de la réception du trafic en provenance des canaux;
- l'activation du trafic sortant en libérant le trafic de la mémoire tampon de l'unité de rechange.

2. Procédé selon la revendication 1,
**caractérisé en ce que** le trafic entrant vers les canaux de l'unité à permuter est interrompu en transmettant une requête de rangement en mémoire tampon de tout trafic pour la durée de permutation de l'unité à l'extrémité éloignée des canaux concernant l'unité à permuter.

3. Procédé selon la revendication 1 ou 2,
**caractérisé en ce qu'**une partie du trafic entrant vers les canaux de l'unité à permuter est protégée à l'extrémité lointaine et à une partie de l'extrémité de l'unité à permuter pendant la permutation de l'unité.

4. Procédé selon la revendication 1 ou 2,
**caractérisé en ce que** tout le trafic entrant de l'unité à permuter est protégé à l'extrémité de l'unité à permuter pendant la durée de la permutation de l'unité.

5. Procédé pour implémenter une permutation d'unité dans un noeud acheminant des données paquet, caractérisé en
- le guidage du trafic aboutissant aux canaux de l'unité à permuter vers les canaux de réserve du noeud par un transfert intercellulaire;
- l'effacement des mémoires tampons de transmission des canaux de l'unité à permuter en transmettant des données qui s'y trouvent à sa destination;
- la commutation d'un ensemble de rechange aux canaux de l'unité à permuter, et la mise à jour de l'information du noeud pour correspondre à la nouvelle configuration, et le démarrage de la réception du trafic entrant des canaux;
- la réalisation d'un transfert intercellulaire du trafic sortant en provenance des canaux de réserve vers les canaux de l'ensemble de rechange.

6. Procédé selon la revendication 5,
**caractérisé en ce que** la permutation de l'unité est réalisée en commutant le trafic de chaque canal à une deuxième unité sur un canal de rechange par un transfert intercellulaire, après quoi l'unité à permuter qui ne traite pas le trafic est remplacé par une unité de rechange, après quoi le trafic est retourné aux canaux d'origine dans l'unité de rechange.
